# EUROPEAN PATENT APPLICATION

(11) **EP 4 647 152 A1**
(43) Date of publication of application: **12.11.2025**
(21) Application number: 24175278.1
(22) Date of filing: 10.05.2024
(51) Int. Cl.: B01F 27/50, B01F 27/55, B01F 33/452, B01F 33/503, B01F 35/12, B01F 35/21, G01F 1/52, G01F 1/05, G01F 1/10, G01F 1/22

(54) **MEASURING SYSTEM**

(71) Applicant: ABB SCHWEIZ AG, 5400 Baden (CH)
(72) Inventor: DOE, William, Bristol, BS3 5BJ (GB); REDFERN, Adam, Gloucester, GL2 8NE (GB)
(74) Representative: Maiwald GmbH

(57) **Abstract**

The invention relates to a measuring system (1), comprising:
a measuring chamber (10) for receiving a sample fluid; an agitating element (30) provided within the measuring chamber (10) for agitating the sample fluid, wherein a position of the agitating element (30) is variable between a first position (A) and a second position (B) inside the measuring chamber (100) depending on a flow rate of the sample fluid; and an optical measurement arrangement (20) with an optical measurement path (X) for determining the position of the agitating element (30);
wherein the measuring system (1) is configured to determine the position of the agitating element (30) based on a measurement signal from the optical measurement arrangement (20), the measurement signal being indicative of the agitating element (30) being inside or outside of the optical measurement path (λ).

## Description

### FIELD OF INVENTION

The present disclosure relates to a measuring system.

### BACKGROUND

Automatic measuring systems or chemical or optical detection systems typically require a sample flow detection that may employ a float switch or a dedicated flow meter on the sample inlet of the device. In particular, a float switch or a turbine/thermal flow meter may be used for example. These devices may be costly and require extra space within in the detection system.

### SUMMARY

The above problem is at least partially solved or alleviated by the subject matter of the independent claim of the present disclosure, wherein further examples are incorporated in the dependent claims.

According to a first aspect, there is provided a measuring system, comprising a measuring chamber for receiving a sample fluid, an agitating element provided within the measuring chamber for agitating the sample fluid, wherein a position of the agitating element is variable between a first position and a second position inside the measuring chamber depending on a flow rate of the sample fluid and an optical measurement arrangement with an optical measurement path for determining the position of the agitating element, wherein the measuring system is configured to determine the position of the agitating element based on a measurement signal from the optical measurement arrangement, the measurement signal being indicative of the agitating element being inside or outside of the optical measurement path.

The sample fluid may be for example but not limited to a pressurized fluid from a pipe, tank, a bottle or similar, in particular at atmospheric pressure. The fluid may in particular be a liquid, in particular water or comprising water, in particular predominantly water.

For example, the measuring chamber may be a measuring cuvette, a flow cell, a sample vial or similar. The measuring chamber may comprise or be made of glass, quartz, plastic like PMMA or similar or a combination of these materials for example. The shape of the measuring chamber can vary based on the specific requirements of the application. It may be cylindrical, rectangular, conical, or have other geometrical shapes suitable. The measuring chamber may be configured to be filled with a fluid in particular a liquid, to be optically detected by an optical measurement arrangement that may for example be arranged laterally to the measuring chamber. The measuring chamber may include features such as ports or inlets and outlets for introducing and removing sample fluids, as well as connections for sensors, probes, or other instrumentation. The measuring chamber may comprise at least a light permeable portion or may be permeable in its entirety for example.

The agitating element may have a substantially cylindrical, or oval shape. Alternatively, the agitating element may have a different shape depending on the specific requirements of the analysis and the characteristics of the sample fluid. For example, the agitating element could include paddles, propellers, magnetic stir bars, or impellers, configured to ensure efficient mixing based on factors such as viscosity, sample volume, and desired mixing intensity. The agitating element may comprise a driving portion which may be configured for converting the flow of the sample fluid into a rotating and/or elevating motion of the agitating element for example. For example, the agitating element may be made at least partially of PTFE (polytetrafluoroethylene), Polypropylene (PP), Polyethylene (PE) and foam materials or similar. For example, the agitating element could comprise one or more magnets and could be coated for example with PTFE. The agitating element may be intended for, in particular configured for, having a buoyancy within the measuring chamber at a certain flow rate of the sample fluid. The position of the agitating element within the measuring chamber may vary depending on the flow rate.

The optical measurement arrangement of the measuring system may be arranged at a first region in particular bottom region of the measuring chamber. The optical measurement arrangement of the measuring system may be arranged at a second region in particular top region of the measuring chamber. The optical measurement arrangement of the measuring system may be arranged laterally or at the side walls of the measuring chamber to monitor the agitating element laterally. It is also conceivable that parts of the optical measurement arrangement may be arranged at the first or second region and other parts laterally of the measuring chamber. Depending on the application requirements, the optical measurement arrangement may be arranged at multiple locations within the fluid system to enable analysis of the sample fluid and determining the position of the agitating element. The optical measurement arrangement may be configured for determining the position of the agitating element within the measuring chamber. By utilizing the measuring system, an automatic detection of the agitating element may be enabled by adding an additional circuit to an already existing optical arrangement, to facilitate a flow rate detection within the measuring chamber or cuvette of the measuring system for example. In other words, the measuring system can be employed in conjunction with an already existing optical arrangement for analyzing a sample fluid. Examples for such an optical arrangement could include analyzers for measuring chemical parameters such as pH, concentration of dissolved substances, or reaction kinetics. Other examples could include colorimetric measurements, fluorescence, titrating, UV absorbance or similar. By incorporating the additional circuit, functionality may be expanded to monitor and detect the movements and positions of the agitating element or in other words a flow-switch to enable flow detection within the measuring chamber or cuvette of the measuring system. The optical arrangement may be further configured to detect measurement signals while the sample is being analyzed, whereas the additional circuit may be configured to determine the position and control the movements of the agitating element.

In an example, the measuring system may be further configured to determine the flow rate of the sample fluid depending on the position of the agitating element being inside of the optical measurement path or outside of the optical measurement path. This may mean that besides determining the position of the agitating element, the measuring system may also be configured to use this information for estimating the flow rate of the sample fluid. For example, when the agitating element is inside the optical measurement path, it may be indicative for a certain flow rate, and when it's outside the optical measurement path, it may be indicative for another flow rate. For example, by comparing the determined position of the agitating element with a predefined flow rate, the measuring system may determine the flow rate of the sample fluid.

Accordingly, the measuring system enables analysis of a sample fluid and determining the position of the agitating element based on a measurement signal from the optical measurement arrangement and thus a flow rate of sample fluid.

For example, in the first position of the agitating element within the measuring chamber, the agitating element may be provided at a bottom end of the measuring chamber due to a decreased or no flow of the sample fluid, for example. When the agitating element is in the first position, it may not interfere with the optical measurement path of the optical measurement arrangement and a signal of no or low flow may be generated for example. Further, in the first position reagents may be added to the measuring chamber for optically analyzing the sample fluid and the agitating element may be configured to rotate for mixing the sample fluid with the reagents for example. Thus, in the first position the measuring system may be configured for analyzing the sample fluid for example.

For example, in a case where the measuring chamber needs to be flushed with fresh sample fluid, for example after finishing one analysis of a sample, a control signal for flushing the measuring chamber may be generated. Thus, by flushing the measuring chamber, the agitating element may be elevated from its first position due to buoyancy to the second position within the measuring chamber due to the flow of the sample fluid. Thus, when there is an increased flow of sample fluid, the agitating element may be elevated or lifted and interfere with the optical measurement path of the optical measurement arrangement in the second position. This may generate a signal of an increased flow of sample fluid, for example.

Other configurations of the measuring system may be conceivable where an interference with the optical measurement path may be indicative of an increased or high flow of a flow rate and vice versa, depending on the position of the measurement arrangement.

In an example, the measuring system may further comprise an inlet arranged at a first region of the measuring chamber for providing the sample fluid and an outlet arranged at a second region of the measuring chamber for draining the sample fluid, the first region being opposite the second region and the optical measurement path being between the first region and the second region.

The inlet may be arranged at the first region or a bottom region of the measuring chamber and configured to allow the sample fluid to flow into the measuring chamber. For example, the inlet may be arranged at the first position of the agitating element, so that the fluid may enter tangentially to a cylindrical part of the measuring chamber to provide a suitable rotation of the agitating element. Additionally, the inlet may be configured for adding any necessary reagents or additional substances required for optically analyzing the sample fluid. The measuring chamber may further comprise an outlet arranged at a second region in particular a top region of the measuring chamber for draining the sample fluid from the measuring chamber after an analysis is complete for example. Because the inlet and outlet are located opposite each other, a constant flow of sample fluid may be ensured. This may provide an efficient circulation of the sample fluid and thus a reliable measurement for example. The inlet and the outlet may be arranged such that a flow of sample fluid may enter the first region or bottom region of the measuring chamber and exits the second region in particular top region of the measuring chamber. Other configurations are conceivable where the flow of sample fluid may enter the second region in particular top region of the measuring chamber first and exits the first region or bottom region of the measuring chamber.

In an example, the measuring system may further comprise one or more valves and/or pumps coupled with the inlet and/or the outlet, the one or more valves and/or pumps being configured to control the flow rate of the sample fluid for varying the position of the agitating element.

The one or more valves and/or pumps may be arranged near the inlet and/or outlet of the measuring chamber to control the entry and exit points of the sample fluid. The one or more valves and/or pumps may be coupled to the inlet and the sample fluid in this case the pressurized fluid. For example, the one or more valves and/or pumps may be configured to be in communication with the optical measurement arrangement and may for example be configured to control the flow within the measuring chamber according to the determined position of the agitating element. For example, if the one or more valves and/or pumps receives a signal indicative of a high flow rate of the sample fluid, the one or more valves and/or pumps may be configured to close upon the signal indicative for the high flow rate received by the optical measurement arrangement. Due to the closed valves and/or pumps the flow of sample fluid may decrease, leading to a decrease in buoyancy of the agitating element. The agitating element may therefore return to the first region or bottom region of the measuring chamber. When the agitating element returns to the first region or bottom region of the measuring chamber, the agitating element leaves the optical measurement path of the optical measurement arrangement. In another example, the one or more valves and/or pumps may receive a signal for flushing the measuring chamber or draining the sample fluid. Thus, the one or more valves and/or pumps may be configured to open for a time duration such that at a flow rate of the sample fluid is increased and the flushing of the measuring chamber is completed. Further, by adjusting the flow rate with the one or more valves and/or pumps, the measuring system may be configured to manipulate the agitating element, such as its speed of rotation or elevation, for example. The one or more valves and/or pumps may further be dynamically adjustable, by dynamically adjusting the flow rate using the one or more valves and/or pumps in response to the position of the agitating element, the measuring system may be configured to maintain optimal conditions for accurate measurements for example. This dynamic adjusting may ensure that the agitating element remains in the desired position within the measuring chamber, allowing for continuous and precise monitoring of the sample fluid. Additionally, by controlling the flow rate, the system can facilitate processes such as sample flushing and chamber cleaning, enhancing the overall efficiency and reliability of the measuring system.

In an example, the optical measurement arrangement comprises a light generating unit (LGU) for generating a light beam and a light receiving unit (LRU) for measuring the light beam, wherein the LGU and the LRU may be arranged in such a way that the light emitted by the LGU passes through the measuring chamber and is detected by the LRU on an opposite side of the LGU, thereby forming the optical measurement path.

The LGU may generate the light used in the measurement process. It could be one of a light-emitting diode (LED), laser diode, or similar. The LGU may be arranged at one side of the measuring chamber, opposite to the LRU. The LGU may be configured for emitting a beam of light that passes through the measuring chamber comprising the sample fluid for example. The emitted light may be configured for analyzing the sample fluid and/or determining the position of the agitating element and thus, a flow rate. For chemical analysis, the LGU may emit light at specific wavelengths according to the absorption or fluorescence properties of the target analytes in the sample fluid for example. For flow detection, the same light as for chemical analysis may be utilized or the LGU or an additional LGU may emit another beam of light that interacts with the agitating element within the measuring chamber, allowing detection of its position based on changes in light transmission.

The LRU may be configured to detect the transmitted light. For example, the LRU could be a light-sensitive sensor capable of detecting variations in light intensity, wavelength, or polarization caused by interactions with the sample fluid and/or the agitating element.

The LGU and LRU may be arranged on opposite sides of the measuring chamber, allowing the light beam to pass through the sample fluid and interact with the agitating element, for example. The LGU and LRU may also be arranged on the same side of the measuring chamber, for example by utilizing reflectors or similar. Several LGUs and LRUs may be arranged at different angles around the measuring chamber allowing for multidirectional light emission and detection, enhancing coverage and accuracy in measuring optical properties of the sample fluid, for example. The LGU and LRU may further be integrated into a single unit, positioned at any suitable location relative to the measuring chamber.

In an example, the measuring system may be configured such that the agitating element, in the first position or second position, is outside of the optical measurement path and the agitating element, in the second position or the first position, is inside the optical measurement path.

For example, the measuring system may be configured to allow flexibility in the positioning of the optical measurement path relative to a first position and a second region of the measuring chamber. For example, the optical measurement arrangement can be arranged in the first region of the measuring chamber or the bottom region or in the second region of the measurement chamber in particular the top region. If the optical measurement arrangement may be arranged in the first region of the measuring chamber, the agitating element may be inside of the measurement path when it is in the first position. Thus, when the agitating element may be in the first position it may be inside the optical measurement path. Conversely, when the agitating element is in the second position, it may be outside of the measurement path.

In another example the optical measurement arrangement may be arranged in the second region in particular top region of the measuring chamber. In this configuration, the agitating element may be outside of the measurement path in the first position. Conversely, when the agitating element is in the second position, it may be inside of the measurement path.

The position of the measurement arrangement is not limited to these positions. Any arrangement which may be suitable for a specific application may be conceivable. For example, the measurement arrangement could be arranged in any position in between the first and the second region of the measuring chamber. The measurement arrangement could also be in any position between the first or the second position of the agitating element for example.

In an example, the measuring system may be configured such that in the first position of the agitating element, the agitating element is provided at a first region of the measuring chamber, which is indicative of a first flow rate of the sample fluid and in the second position of the agitating element, the agitating element is elevated from the first position to a second region of the measuring chamber, which is indicative of a second flow rate of the sample fluid, the second flow rate being larger than the first flow rate.

The measuring system may be configured such that when the agitating element may be in the first position, it may be provided at a first region within the measuring chamber. This positioning of the agitating element in the first region may serve as an indicator of a first flow rate of the sample fluid. For example, when the agitating element may be in the first position, it may indicate that the flow rate of the sample fluid is at a certain predetermined level, referred to here as the first flow rate.

Conversely, an elevation of the agitating element to the second region may indicate a change in the flow rate of the sample fluid. Specifically, the second position of the agitating element may indicate a flow rate that is greater than the flow rate associated with the first position. Therefore, the second flow rate, may correspond to the second position or elevated position of the agitating element, which may be larger than the first flow rate when the agitating element may be in the first position.

In an example, the optical measurement arrangement may at least comprise one additional light generating unit (LGU) providing an additional optical measurement path with the light receiving unit (LRU), wherein the measuring system is configured such that the agitating element, in the first position, is inside the additional optical measurement path of the optical measurement arrangement and the agitating element, in the second position, is outside of the additional optical measurement path of the optical measurement arrangement.

With a utilization of an additional optical measurement path, the measuring system may be configured to perform measurements along two separate optical paths simultaneously for example. For example, one of the LGUs could be arranged opposite an LRU, another LGU could be arranged diagonally opposite the LRU to form two separate optical measurement paths. For example, the first optical measurement path could be used to analyze the sample fluid, while the additional optical measurement path may be used to determine the position of the agitating element and thus a flow rate of the sample fluid. It is also conceivable that the optical measurement arrangement comprises more LGUs and LRUs at several positions which are configured to form several optical measurement paths. This may be for example beneficial in certain structural conditions or in conditions where the light for analyzing and determining the position of the agitating element needs to be separated.

In an example, the measuring system is configured such that in the first position of the agitating element, the agitating element is provided at a first region of the measuring chamber being inside of the additional optical measurement path, wherein the first position of the agitating element is indicative of a first flow rate or low flow rate of the sample fluid and wherein in the second position of the agitating element, the agitating element is elevated with respect to the first position of the agitating element being outside of the additional optical measurement path, wherein the second position of the agitating element is indicative of a second flow or increased flow rate of the sample fluid.

The additional LGU may for example be arranged on a diagonally opposite side of the LRU forming an additional optical measurement path with the LRU, wherein the measuring system may be configured such that the agitating element, in the first position, may be inside the additional optical measurement path of the optical measurement arrangement. Further, in the second position of the agitating element, the agitating element may be outside of the additional optical measurement path of the optical measurement arrangement. The measuring system may further be configured such that in the first position of the agitating element, the agitating element may be provided at a first region of the measuring chamber being inside of the additional optical measurement path. The first position of the agitating element may be indicative of a low flow rate of the sample fluid. In the second position of the agitating element, the agitating element may be elevated with respect to the first position of the agitating element being outside of the additional optical measurement path. The second position of the agitating element may be indicative of an increased flow rate of the sample fluid. In this configuration the optical measurement arrangement may be configured for optically analyzing the sample fluid with the first optical measurement path and for determining the flow of the sample fluid with the additional optical measurement path. This may be for example beneficial in a case where optically analyzing or turbidity measurements may be performed in a continuous manner, or the optical measurement path needs to be free for measurement in a permanent manner. Other configurations are conceivable, where the additional optical measurement path may be configured for optically analyzing the sample fluid and the first optical measurement path for determining the flow rate of the sample fluid for example.

In an example, the optical measurement arrangement may be configured for optically analyzing the sample fluid and/or the measuring system comprises a further optical measurement arrangement configured for optically analyzing the sample fluid.

As mentioned before, for determining the position of the agitating element and optically analyzing the sample fluid, the same optical measurement path may be utilized. In this way, both the analysis of the sample fluid and determining of the position of the agitating element may be carried out simultaneously, without the need of an extra device for determining a flow rate of the sample fluid.

In some configurations it may be beneficial to separate the optical measurement arrangement in a way that the position determining of the agitating element and analyzing of the sample fluid can be performed independently. This may for example be beneficial in a case where different types of optical sensors or detectors needs to be employed. A measuring system with separate optical measurement arrangements could also be designed as a modular system that could be easily integrated into existing setups for example.

In an example, the optical measurement arrangement may be configured for optically analyzing the sample fluid comprising a reagent, wherein the agitating element may be configured for mixing the sample fluid and reagent, and/or the optical measurement arrangement may be configured for measuring turbidity. A flow of reagent may be controlled by one or more valves and/or pumps, for example.

For example, the optical measurement arrangement may be arranged at a second region in particular top region of the measuring chamber. This may be beneficial for optically analyzing several consecutive sample fluids or similar. For example, the measuring system in this example may be of a batch-type analyzer. A batch-type analyzer may perform measurements on a sample fluid before moving on to the next sample and therefore needs to exchange the sample fluid after measurement for example. Examples could include analyzers measuring chemical parameters such as pH, concentration of dissolved substances, or reaction kinetics. More examples for utilizing the measuring system could be measuring the quality of water samples by measuring parameters such as suspended particle concentrations, or pollutant levels or similar. Other examples could include colorimetric measurements, titrating or similar. The necessary reagents for performing optically analyzing may be provided via an inlet and could then be mixed or stirred for example by the agitating element to ensure that the sample fluid and the reagent are evenly distributed throughout the measuring chamber.

In a case where the optical arrangement for example may be arranged at a first region in particular bottom region of the measuring chamber, this may be beneficial for continuous type measurements where a constant flow of fluid is required. Thus, when the agitating element is elevated due to an increased flow of fluid or sample fluid, the agitating element may be outside of the measurement path, which may be indicative of an increased flow rate of sample flow. This may mean if the flow rate decreases and the agitating element returns to its first position and attenuating or blocking the measurement path, a signal may be generated as described before, that a flow rate is decreased. This signal may be configured to be received by a valve. This valve may be configured to open and increase the flow rate of the fluid, such that the agitating element may be elevated or lifted by the flow rate of the sample fluid. This may be beneficial for turbidity measurements or similar, where a constant flow of fluid is required. Turbidity measurements may for example comprise a measure of the cloudiness or haziness of a fluid caused by suspended particles for monitoring a quality of drinking water or similar. For turbidity measurements no stirring or mixing might be necessary.

In an example, the agitating element may comprise a driving portion for converting the flow of the sample fluid into a rotating and/or elevating motion of the agitating element and/or an agitating portion for agitating the sample fluid.

The agitating element may have a substantially cylindrical shape or oval shape or ball shape or similar. The agitating element may also have a rectangular shape or similar for example. Alternatively, the agitating element may comprise a bearing neck or similar. The agitating element may comprise a driving portion which is configured for converting the flow of the sample fluid into a rotating and/or elevating motion of the agitating element for example. This may mean that the driving portion of the agitating element may comprise structures such as paddles, fins, or other structures that interact with the flow of the fluid to induce motion. The agitating element may further comprise an agitating portion which may be configured for agitating the sample fluid within the measuring chamber. Agitating the sample fluid may refer to a process of stirring, mixing, or agitating the fluid within the measuring chamber of the measuring system. Agitating the sample fluid may be performed to ensure uniform distribution of particles, solutes or reagents, or components within the sample fluid for example. The agitating portion may comprise additional structures or features configured to generate turbulence or stirring within the sample fluid. For example, the agitating portion may be an elevation on the top surface of the agitating element. The shape of the agitating element is not limited to this examples, any shape of the agitating element that allows the sample to be agitated or stirred is conceivable.

In an example, the measuring system may further comprise one or more driving units configured to drive the agitating element.

The one or more driving units may be arranged at a first region in particular bottom region of the measuring chamber or at a second region in particular top region for example. There may be provided one driving unit, but several driving units may be provided at or adjacent to the measuring chamber. The driving units may be provided at any location from the first region to the second region of the measuring chamber and may also extend over the entire length of the measuring chamber. The one or more driving units may be in physical contact with the agitating element, for example through a mechanical shaft or rod. This connection could be due to couplings, bearings, or other mechanical elements to ensure robust and reliable transmission of motion for example. Thus, the one or more driving units could be configured to directly rotate the agitating element through a mechanical shaft or rod or similar. Any other transmission of force from the one or more driving units to the agitating element to agitate the sample fluid is conceivable.

In an example, one or more driving units may be inductors and the agitating element may comprise one or more magnets, wherein the inductors are configured to generate a magnetic field for inducing a motion of rotation of the agitating element comprising the one or more magnets.

The one or more driving units may be arranged at a bottom region of the measuring chamber, so that the at least one inductor may be configured to interact with the agitating element inside the measuring chamber to generate a magnetic field for inducing a motion of rotation or similar of the agitating element. This may then induce an inertia of rotation of the agitating element for example. For example, the at least one inductor may be configured to generate a magnetic field for a predefined time interval for momentarily inducing the motion of rotation of the agitating element and increasing the inertia of rotation. There may be provided additional driving units in the case the driving units are of the inductor type for example to generate a proper magnetic field.

The additional driving units may be arranged opposite each other. It is also conceivable that a motor may be spinning the one or more magnets.

In an example, the measuring system may comprise a clearance between an outer surface of the agitating element and an inner surface of the measuring chamber dimensioned such that the outer surface of the agitating element comes into contact with the inner surface of the measuring chamber during driving of the agitating element for cleaning and/or polishing the inner surface of the measuring chamber.

For example, the diameter of the measuring chamber and the diameter of the agitating element may be such that buoyancy of the agitating element under appropriate flow conditions is facilitated and to support cleaning and/or polishing processes. This may mean, that the clearance between the outer surface of the agitating element and the inner surface of the measuring chamber may be dimensioned such that a flow of sample fluid may pass this clearance without elevating the agitating element at a first flow rate and at a second flow rate, the flow of the sample fluid may generate buoyancy, thereby elevating the agitating element. Further, in a case where an inlet is arranged at a first region in particular bottom region of the measuring chamber, or tangentially to the first position of the agitating element for example, a flow of sample fluid may impart a rotating movement or a spin to the agitating element. This may cause the agitating element to rotate against the inner surface of the measuring chamber, thereby cleaning and/or polishing the inner surface. The agitating element may further have protrusions or fins or lamella or similar for facilitating the cleaning and/or polishing process. This may reduce an amount of maintenance work like cleaning or similar for example. This cleaning and/or polishing may not be limited to the first position of the agitating element. Depending on the position or number of inlets and/or flow rate of sample fluid, for example due to a degree of opening of a valve, the rotating movement against the inner surface of the measuring chamber may extend over the entire length of the measuring chamber and thus clean and/or polishing the measuring chamber.

It is noted that the above examples may be combined with each other irrespective of the aspect involved.

These and other aspects will be apparent from and elucidated with reference to the embodiments as per the drawings described hereinafter.

### BRIEF DESCRIPTION OF THE FIGURES

Examples of the disclosure will be described in the following with reference to the following schematic drawings.
- Fig. 1A - 1B: show an example of a measuring system;
- Fig. 2A - 2B: show an alternative example of a measuring system;
- Fig. 3A - 3B: show another alternative example of a measuring system;
- Fig. 4A - 4B: show an agitating element from a side view (Fig. 4A) and from a top view (Fig. 4B);
- Fig. 5: shows a flow chart illustrating an embodiment of a method 100 for operating a measuring system according to the present disclosure.

The figures are merely schematic representations and serve only to illustrate examples of the disclosure. Identical or equivalent elements are in principle provided with the same reference signs.

### DETAILED DESCRIPTION OF EMBODIMENTS

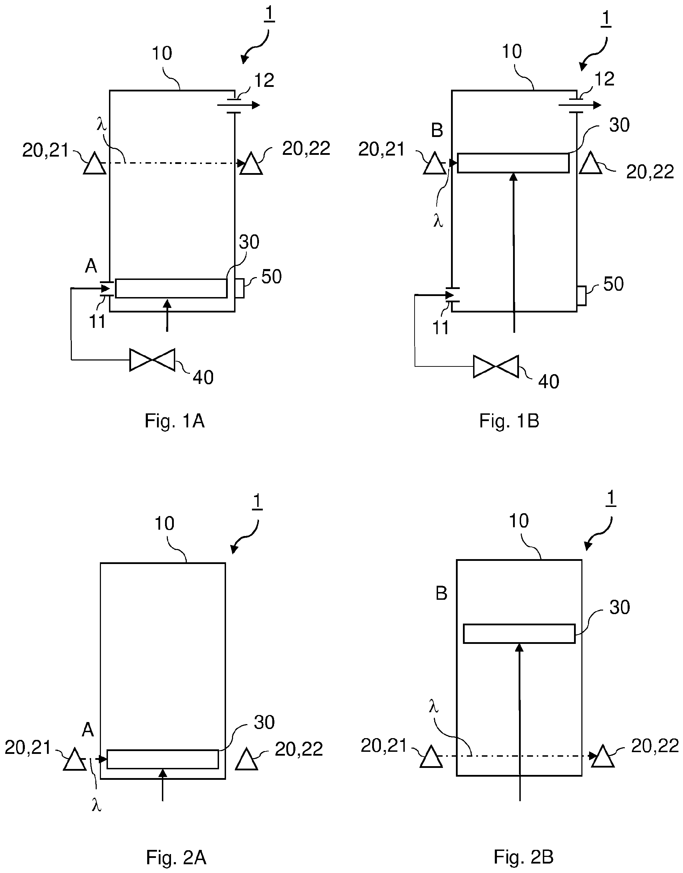

Fig. 1B and Fig. 1B show schematically, a side view of a measuring system 1. The measuring system 1 comprises a measuring chamber 10, e.g., in the form of a measuring cuvette.

The measuring system 1 comprises an agitating element 30 arranged in the measuring chamber 10. The agitating element 30 may be configured to be rotatable for agitating or stirring a fluid in the measuring chamber 10, for example. The measuring system 1 may further comprise a driving unit 50 configured to agitate the agitating element 30 such as one or more inductor arrangements that comprises at least one inductor. In the case the driving unit 50 comprises one or more inductors, the agitating element 30 may comprise one or more magnets. The driving unit 50 may be arranged at a first region in particular bottom region of the measuring chamber 10, such that the driving unit 50 may be configured to interact with the agitating element 30 inside the measuring chamber 10 to generate a magnetic field for inducing a motion of rotation of the agitating element 30 for example, which may then have an inertia of rotation. For example, the at least one inductor may be configured to generate a magnetic field for a predefined time interval for momentarily inducing the motion of rotation of the agitating element 30 and increasing the inertia of rotation. In this example, there is provided one driving unit 50 but several driving units may be provided at or adjacent to the measuring chamber 10. For example, there may be provided additional driving units 50 in the case the driving units 50 are of the inductor type to generate a magnetic field of a desired size. The additional driving units 50 may be arranged opposite of each other.

The driving units 50 may be provided at any location from the first region to the second region of the measuring chamber 10 and may also extend over the entire length of the measuring chamber 10.

In a case where the driving unit 50 may not be of an inductor type, the driving unit 50 may be in physical contact with the agitating element 30, for example through a mechanical shaft or rod. This connection could be reinforced by couplings, bearings, or other mechanical elements to ensure robust and reliable transmission of motion. Thus, the driving unit 50 could be configured to directly rotate the agitating element 30 through a mechanical shaft or rod. Any other transmission of force from the driving unit 50 to the agitating element 30 to agitate the sample fluid is conceivable.

The measuring chamber 10 in this example is configured to be filled with a sample fluid, e.g., liquid, to be optically detected by an optical measurement arrangement 20 that is arranged laterally at or to the measuring chamber 10. The measuring chamber 10 may comprise at least a light permeable portion or may be permeable in its entirety, for example. The optical measurement arrangement 20 comprises a light generating unit (LGU) 21 for generating a light beam and a light receiving unit (LRU) 22 for measuring the light beam, thus forming an optical measurement path (λ). The LGU 21 for example may be a LED and the LRU 22 for example may be a photodiode. The LGU 21 and LRU 22 may be arranged in such a way that the light emitted by the LGU 21 passes through the measuring chamber 10 and is detected by the LRU 22 on the opposite side of the LGU 21. Further, the LGU 21 and the LRU 22 may be arranged at a top section of the measuring chamber 10. The number of LGUs 21 and the LRUs 22 as well as their arrangement is just exemplary and depending on the application there can be several LGUs 21 and or LRUs 22 placed in any suitable position. The fluid to be detected may be a sample liquid, a reagent liquid and/or a mixture liquid of the sample liquid and the reagent liquid. In particular, the agitating element 30 may be configured to rotate about an axis of rotation for agitating the fluid and for causing the fluid to swirl in the measuring chamber 10.

The measuring chamber 10 comprises an inlet 11 arranged at the first region in particular bottom region of the measuring chamber 10 for providing the sample fluid. The inlet 11 may be configured to allow the sample fluid to flow into the measuring chamber 10 at a certain flow rate, which may be limited by a diameter of the inlet 11 and/or the valve 40 as shown in Fig. 1A for example. The measuring chamber 10 further comprises an outlet 12 arranged at the second region in particular top region of the measuring chamber 10 for draining the sample fluid. The measuring system 1 further comprises a valve 40 coupled with the inlet 11 and being configured to control the flow rate of the sample fluid for varying the position of the agitating element 30. The position and the number of the valve 40 is just exemplary. There could be one or more valves and/or pumps 40 coupled with the inlet 11 and/or the outlet 12.

Fig. 1A shows the agitating element 30 in the first position A. In this first position A, the optical measurement arrangement 20 may be configured for optically analyzing the sample fluid with the generated light beam within the optical measurement path λ. For optically analyzing the sample fluid, a reagent may be provided, wherein the agitating element 30 may be configured for stirring the sample fluid and reagent, and/or the optical measurement arrangement 20 may be configured for measuring turbidity, for example. Optically analyzing may include for example colorimetric measurements, titrating, or similar. The driving unit 50 is configured to drive the agitating element 30 in this example.

For example, in order to perform an optical analysis in the measuring system 1, the optical measurement arrangement 20 may be combined with a chemical and/or an electrical detecting element and may be arrangeable laterally to the measuring chamber 10 or at a side wall of the measuring chamber 10 or similar. Further, a distance between an outer surface of the agitating element 30 and an inner surface of the measuring chamber 10 may be such that a buoyancy of the agitating element 30 within the measuring chamber 10 may be generated. Thus, when a flow of sample fluid flows into the measuring chamber 10 with a certain flow rate, the agitating element 30 experiences buoyancy and is elevated from the first position A to the second position B. This may be the case, for example, when the measuring chamber 10 needs to be filled with the sample fluid or the sample fluid needs to be drained or replaced or similar. A control signal may be generated, for example by the measuring system 1, to open the valve 40, which is coupled to the inlet 11 of the measuring chamber 10. This control signal may be part of a computer program and can include, for example, a time duration for opening the valve 40 to enable a filling of the measuring chamber 10 with sample fluid. This process of filling or draining the sample fluid may be fully automatic or partially controlled manually. To effectively fill or drain the sample fluid, the valve 40 may be configured to generate a flow of sample fluid between the inlet 11 and the outlet 12, thus from the first region of the measuring chamber 10 to the second region. It is also conceivable that the valve 40 is coupled to the outlet 12 and generating a flow in the opposite direction is conceivable, thus from the second region of the measuring chamber 10 to the first region.

However, in the case the sample fluid for example needs to be drained, the valve 40, coupled to the inlet 11, is configured to be open for a time duration such that at a flow rate of the sample fluid is increased. In this example, the inlet 11 is provided tangentially to the agitating element 30 at the bottom region of the measuring chamber 10. The agitating element 30 may comprise a driving portion 31 for converting the flow of the sample fluid into a rotating and/or elevating motion of the agitating element 30. Further, the agitating element 30 may comprise a light-weight material that facilitates buoyancy such as but not limited to PTFE for example. Further, a diameter of the agitating element 30 relative to a diameter of the measuring chamber 10 may be designed to enable and/or facilitate buoyancy of the agitating element 30 in the event of a flow of sample fluid. Thus, if the sample fluid flows into the measuring chamber 10, the agitating element 30 may be configured to be elevated or lifted by the sample fluid and therefore change its position from the first position A to the second position B as shown in Fig. 1B. In this second position B, the optical beam path λ of the optical measurement arrangement 20 may be attenuated or blocked by the agitating element 30. The optical measurement arrangement 20 may be configured to detect this attenuated or blocked optical beam path λ and may generate a signal which is indicative of a second flow rate or in this example high flow rate of the sample fluid. Thus, if the optical measurement arrangement 20 detects that the optical beam path λ is attenuated or blocked it may generate a signal which is indicative of a high flow rate of the sample fluid. The optical measurement arrangement 20 may further be configured to forward this signal to the valve 40, for example. The valve 40 may be configured to control the flow rate of the sample fluid for varying the position of the agitating element 30. This may mean that the valve 40 may be configured to close upon the signal indicative for the high flow rate being received by the optical measurement arrangement 20. Due to the closed valve 40, the flow decreases, leading to a decrease in buoyancy of the agitating element 30. The agitating element 30 therefore changes its position, in this example sinks, back to the first position A at the first region in particular bottom region of the measuring chamber 10. When the agitating element 30 sinks to the bottom region of the measuring chamber 10, the agitating element 30 leaves the optical beam path λ and the light emitted by the LGU 21 passes through the measuring chamber 10 and is detected by the light receiving unit 22 again. In the first position A, the optical measurement arrangement 20 may be configured for optically analyzing the sample fluid with the generated light beam within the optical measurement path λ again.

The measuring system 1 in this example may for example be a batch-type analyzer. A batch-type analyzer may perform measurements on a sample fluid before moving on to the next sample and therefore needs to exchange the sample fluid after measurement for example. Examples could include analyzers measuring chemical parameters such as pH, concentration of dissolved substances, or reaction kinetics. Another example for utilizing the measuring system 1 is to determine the quality of water samples by measuring parameters such as turbidity, suspended particle concentrations, and/or pollutant levels. Other examples could include colorimetric measurements, titrating or similar, as previously mentioned.

Figures 2A and 2B differ from figures 1A and 1B in that the optical measurement arrangement 20 is provided at the first region in particular bottom region of the measuring chamber 10. Thus, if the agitating element 30 is in the first position A, the optical measurement path λ of the optical measurement arrangement 20 is attenuated or blocked by the agitating element 30, which is now indicative of the first flow rate or low flow rate. Conversely to the measuring system 1 of Figs. 1A and 1B, an elevated position of the agitating element 30 is now indicative of the second flow rate or increased flow rate. Thus, in this example the optical measurement arrangement 20 is configured to generate a signal of an increased flow rate when the agitating element 30 is in the second position B and a signal of low flow when the agitating element 30 is in the first position A. This may mean, that chemical analysis with the optical measurement path λ may be performed when the agitating element 30 is in the second position B and not attenuating or blocking the optical measurement path λ.

The measuring system 1 in this example may for example be configured for continuous type measurements where a constant flow of fluid is required, such as for turbidity measurements, for example. Turbidity measurements may comprise a measure of the cloudiness or haziness of a fluid caused by suspended particles, for example for monitoring a quality of drinking water or a similar fluid.

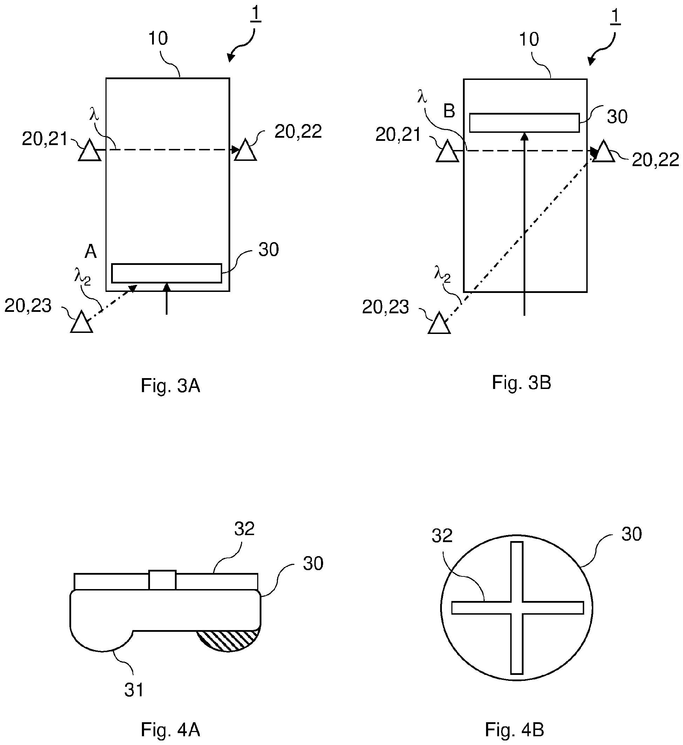

Figures 3A and 3B differ from figures 1A and 1B in that the optical measurement arrangement 20 comprises one additional LGU 23 on an diagonally opposite side of the LRU 22 forming an additional optical measurement path λ₂ with the light receiving unit 22, wherein the measuring system 1 is configured such that the agitating element 30, in the first position A, is inside the additional optical measurement path λ₂ of the optical measurement arrangement 20 and the agitating element 30, in the second position B, is outside of the optical measurement path λ₂ of the optical measurement arrangement 20. The measuring system 1 is further configured such that in the first position A of the agitating element 30, the agitating element 30 is provided at a first region of the measuring chamber 10 being inside of the optical measurement path λ₂, wherein the first position A of the agitating element 30 is indicative of a low flow rate of the sample fluid and wherein in the second position B of the agitating element 30, the agitating element 30 is elevated with respect to the first position A of the agitating element 30 being outside of the optical measurement path λ, wherein the second position B of the agitating element 30 is indicative of an increased flow rate of the sample fluid.

Thus, in this example, the optical measurement path λ for analysing the sample fluid and the optical measurement path λ₂ for determining the position of the agitating element 30 are separated. By separating the optical measurement path λ from the optical measurement path λ₂ the measuring system 1 in this example may be configured for carrying out various analysis or diagnostic functions simultaneously. For example, the optical measurement path λ could be used to determine the fluid composition, while the optical measurement path λ₂ may be used to monitor the position of the agitating element 30 and thus flow rate of the sample rate. In this example, the LGU 21 is configured for analyzing the sample fluid, and the LGU 23 is configured for flow detection. It is conceivable that the LGU 21 is configured for analyzing the sample fluid, and the LGU 23 is configured for detecting the position of the agitating element 30. It is also conceivable that the optical measurement arrangement 20 comprises more LGUs 21 and light receiving units 22 at several positions which are configured to form several optical measurement paths λₙ. The need for multiple optical measurement paths may arise due to structural constraints or specific requirements of the measuring system 1 for example. For example, there may be limited space to accommodate the optical components of the optical measurement arrangement 20. By separating the optical measurement paths λₙ, the components may be placed at different locations within the measuring system 1 to save space and enable an optimal arrangement. It may also be conceivable that the measurement for analysing the sample fluid and the measurement for determining the position of the agitating element 30 needs to be adapted to existing structures or facilities. Separating the optical measurement paths λₙ may allow the measuring system 1 to be designed to seamlessly integrate into the existing structure without requiring major modifications.

Figures 4A and 4B show schematically a side view and a top view of an agitating element 30 for a measuring system 1. The agitating element 30 in this example comprises a substantially cylindrical shape. However, the agitating element 30 may comprise a different shape, for example but not limited to an oval shape or a rectangular shape or ball shape or similar. Alternatively, the agitating element 30 may comprise a bearing neck or similar. The agitating element 30 comprises a driving portion 31 which is configured for converting the flow of the sample fluid into a rotating and/or elevating motion of the agitating element 30 for example. This may mean that the driving portion 31 of the agitating element 30 may comprise structures such as paddles, fins, or other structures that interact with the flow of the fluid to induce motion. This motion may also be utilized for agitating or stirring the sample fluid respectively. The agitating element 30 comprises further an agitating portion 32 which is configured for agitating the sample fluid within the measuring chamber 10. Agitating the sample fluid may refer to a process of stirring, mixing, or agitating the fluid within the measuring chamber 10 of the measuring system 1. This may be performed to ensure uniform distribution of particles, solutes or reagents, or components within the measurement chamber and/or sample fluid. The agitating portion 32 may comprise additional structures or features configured to generate stirring or swirling or similar within the sample fluid. In this example, the agitating portion 32 is a cross-shaped elevation on the top surface of the agitating element 30. This elevation may be part of the agitating element 30 or an additional structure for example glued on or similar. The design of the agitating element 30 is not limited to this, any design of the agitating element 30 that allows the sample to be agitated or stirred is conceivable. The agitating element 30 may be made at least partially of PTFE (polytetrafluoroethylene), Polypropylene (PP), Polyethylene (PE), and foam materials or similar. For example, the agitating element 30 could comprise one or more magnets and could be coated for example with PTFE. The agitating element 30 is intended for, in particular configured for, having a buoyancy within the measuring chamber 10 at a certain flow rate of the sample fluid. The position of the agitating element 30 within the measuring chamber 10 may vary depending on the flow rate.

The agitating element 30 may interact with one or more driving units 50 configured to drive the motion of the agitating element 30. This may comprise applying forces or energy to induce the desired motion, such as rotation or elevation, in the agitating element 30 for example. For instance, the driving units 50 may be inductors that generate a magnetic field to induce rotation in the agitating element 30, which contains one or magnets in this example. Thus, when the inductors produce a magnetic field, it induces a rotational motion in the agitating element 30 due to the interaction between the magnetic fields of the inductors and magnets in the agitating element 30. The driving units 50 may be provided at any location from the first region to the second region of the measuring chamber 10 and may also extend over the entire length of the measuring chamber 10. This may be beneficial in applications where the magnetic field needs to be formed over the entire length of the measuring chamber 10 for example.

Alternatively, or additionally, the driving units 50 could be a mechanical mechanism to drive the motion of the agitating element 30. This could for example be a mechanical shaft or rod directly coupled to the agitating element 30. Thus, the driving unit 50 could be configured to directly rotate the agitating element 30 through a mechanical shaft or rod. The driving units 50 could also comprise hydraulic or pneumatic mechanisms for example.

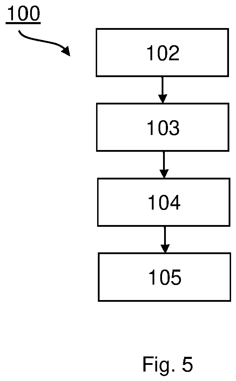

Figure 5 shows a flow chart illustrating an embodiment of a method 100 for operating a measuring system 1 according to the present invention. The method may be carried out by the measuring system 1 or by an optical measurement arrangement 20 arranged in the measuring system 1 for example.

In a first step 102, an agitating element 30 is arranged in a measuring chamber 10 for agitating or stirring a fluid within the measuring chamber 10. The optical measurement arrangement 20 in this example may be arranged at a second region of the measuring chamber 10 and may comprise a light generating unit (LGU) and a light receiving unit (LRU) which are forming an optical measurement path λ. In a first position A of the agitating element 30, the agitating element 30 may be provided at a first region in particular a bottom region of the measuring chamber 10 and may be thus outside of the optical measurement path λ, which may be indicative of a first flow rate or a low flow rate.

In a second step 103, the measuring chamber 10 may be configured to receive a sample fluid via an inlet 11 for example. The sample fluid may be, but is not limited to, a pressurized fluid from a pipe or tank, a bottle of fluid at atmospheric pressure. A valve 40 may be coupled to the inlet 11 and the sample fluid in this case the pressurized fluid. Thus, when the valve 40 receives a signal it may be configured to open and the pressurized fluid may flow into the measuring chamber 10 and is thereby elevating or lifting the agitating element 30.

When the agitating element 30 in a next step 104 may reach a second position B it is attenuating or blocking the optical measurement path λ. This may be indicative for a second flow rate or an increased flow rate. Thus, a signal for the second flow rate or high flow rate may be generated by the optical measurement arrangement 20 and may be send to the valve 40 for example. The valve 40 may be configured to close upon this signal and the flow rate decreases. The agitating element 30 may be configured to leave the second position B until the agitating element 30 reaches the first position A again.

In a next step 105, when the agitating element 30 may be in the first position A, the optical measurement arrangement 20 may be configured for optically analyzing the sample fluid with the generated light beam within the optical measurement path λ. For optically analyzing the sample fluid a reagent may be added to the sample fluid, wherein the agitating element 30 may be configured for mixing or stirring the sample fluid with the reagent. Optically analyzing may include for example colorimetric measurements, titrating, or similar.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope.

### LIST OF REFERENCE SIGNS

- 1: measuring system
- 10: measuring chamber
- 11: inlet
- 12: outlet
- 20: optical measurement arrangement
- 21: light generating unit (LGU)
- 22: light receiving unit (LRU)
- 30: agitating element
- 31: driving portion
- 32: agitating portion
- 40: valve and/or pump
- 50: driving unit
- 100: method for the measuring system
- 102 - 105: steps
- λ: optical measurement path
- λ₂: additional optical measurement path

## Claims

1. A measuring system (1), comprising:
- a measuring chamber (10) for receiving a sample fluid;
- an agitating element (30) provided within the measuring chamber (10) for agitating the sample fluid, wherein a position of the agitating element (30) is variable between a first position (A) and a second position (B) inside the measuring chamber (10) depending on a flow rate of the sample fluid; and
- an optical measurement arrangement (20) with an optical measurement path (λ) for determining the position of the agitating element (30);
wherein the measuring system (1) is configured to determine the position of the agitating element (30) based on a measurement signal from the optical measurement arrangement (20), the measurement signal being indicative of the agitating element (30) being inside or outside of the optical measurement path (λ).

2. The measuring system (1) of claim 1, wherein the measuring system (1) is further configured to determine the flow rate of the sample fluid depending on the position of the agitating element (30) being inside of the optical measurement path (λ) or outside of the optical measurement path (λ).

3. The measuring system (1) of claim 1 or 2, wherein the measuring system (1) further comprises an inlet (11) arranged at a first region of the measuring chamber (10) for providing the sample fluid and an outlet (12) arranged at a second region of the measuring chamber (10) for draining the sample fluid, the first region being opposite the second region and the optical measurement path (λ) being between the first region and the second region.

4. The measuring system (1) of claim 3, wherein the measuring system (1) further comprises one or more valves and/or pumps (40) coupled with the inlet (11) and/or the outlet (12), the one or more valves and/or pumps (40) being configured to control the flow rate of the sample fluid for varying the position of the agitating element (30).

5. The measuring system (1) of any one of the previous claims, wherein the optical measurement arrangement (20) comprises a light generating unit (21) for generating a light beam and a light receiving unit (22) for measuring the light beam, wherein the light generating unit (21) and the light receiving unit (22) are arranged in such a way that the light emitted by the light generating unit (21) passes through the measuring chamber (10) and is detected by the light receiving unit (22) on an opposite side of the light generating unit (22), thereby forming the optical measurement path (λ).

6. The measuring system (1) of any one of the previous claims, wherein the measuring system (1) is configured such that:
∘ the agitating element (30), in the first position (A) or second position (B), is outside of the optical measurement path (λ) and the agitating element (30), in the second position (B) or the first position (A), is inside the optical measurement path (λ); or
∘ the agitating element (30) is outside of the optical measurement path (λ) in the first position (A) and the second position (B).

7. The measuring system (1) of claim 6, wherein the measuring system (1) is configured such that:
∘ in the first position (A) of the agitating element (30), the agitating element (30) is provided at a first region of the measuring chamber (10), which is indicative of a first flow rate of the sample fluid; and
∘ in the second position (B) of the agitating element (30), the agitating element (30) is elevated from the first position (A) to a second region of the measuring chamber (10), which is indicative of a second flow rate of the sample fluid, the second flow rate being larger than the first flow rate.

8. The measuring system (1) of claim 5, wherein the optical measurement arrangement (20) at least comprises one additional light generating unit (23) providing an additional optical measurement path (λ₂) with the light receiving unit (22), wherein the measuring system (1) is configured such that the agitating element (30), in the first position (A), is inside the additional optical measurement path (λ₂) of the optical measurement arrangement (20) and the agitating element (30), in the second position (B), is outside of the additional optical measurement path (λ₂) of the optical measurement arrangement (20).

9. The measuring system (1) of claim 8, wherein the measuring system (1) is configured such that in the first position (A) of the agitating element (30), the agitating element (30) is provided at a first region of the measuring chamber (10) being inside of the additional optical measurement path (λ₂), wherein the first position (A) of the agitating element (30) is indicative of a low flow rate of the sample fluid and wherein in the second position (B) of the agitating element (30), the agitating element (30) is elevated with respect to the first position (A) of the agitating element (30) being outside of the additional optical measurement path (λ₂), wherein the second position (B) of the agitating element (30) is indicative of an increased flow rate of the sample fluid.

10. The measuring system (1) of any one of the previous claims, wherein the optical measurement arrangement (20) is configured for optically analyzing the sample fluid and/or the measuring system (1) comprises a further optical measurement arrangement (20) configured for optically analyzing the sample fluid.

11. The measuring system (1) of claim 10, wherein the optical measurement arrangement (20) is configured for optically analyzing the sample fluid comprising a reagent, wherein the agitating element (30) is configured for stirring the sample fluid and reagent, and/or the optical measurement arrangement (20) is configured for measuring turbidity.

12. The measuring system (1) of any one of the previous claims, wherein the agitating element (30) comprises a driving portion (31) for converting the flow of the sample fluid into a rotating and/or elevating motion of the agitating element (30) and/or an agitating portion (32) for agitating the sample fluid.

13. The measuring system (1) of any one of the previous claims, wherein the measuring system (1) further comprises one or more driving units (50) configured to drive the agitating element (30).

14. The measuring system (1) of claim 13, wherein one or more driving units (50) are inductors and the agitating element (30) comprises one or more magnets, wherein the inductors are configured to generate a magnetic field for inducing a motion of rotation of the agitating element (30) comprising the one or more magnets.

15. The measuring system (1) of any one of the previous claims, wherein the measuring system (1) comprises a clearance between an outer surface of the agitating element (30) and an inner surface of the measuring chamber (10) dimensioned such that the outer surface of the agitating element (30) comes into contact with the inner surface of the measuring chamber (10) during driving of the agitating element (30) for cleaning and/or polishing the inner surface of the measuring chamber (10).
